# EUROPEAN PATENT SPECIFICATION

(11) **EP 4 539 404 B1**
(45) Date of publication and mention of the grant of the patent: **02.09.2026**
(21) Application number: 22945170.3
(22) Date of filing: 06.06.2022
(51) Int. Cl.: H04L 27/00, H04W 4/021, H04W 36/32, H04W 36/36, H04W 4/42

(54) **DATA REQUESTING METHOD AND APPARATUS, REQUEST RECEIVING METHOD AND APPARATUS, COMMUNICATION APPARATUS AND STORAGE MEDIUM**
DATENABFRAGEVERFAHREN UND -VORRICHTUNG, ANFRAGEEMPFANGSVERFAHREN UND -VORRICHTUNG, KOMMUNIKATIONSVORRICHTUNG UND SPEICHERMEDIUM
PROCÉDÉ ET APPAREIL DE DEMANDE DE DONNÉES, PROCÉDÉ ET APPAREIL DE RÉCEPTION DE DEMANDE, APPAREIL DE COMMUNICATION ET SUPPORT DE STOCKAGE

(43) Date of publication of application: 16.04.2025
(73) Proprietor: Beijing Xiaomi Mobile Software Co., Ltd., Beijing 100085 (CN)
(72) Inventor: HONG, Wei, Beijing 100085 (CN)
(74) Representative: Dehns Germany Partnerschaft mbB
(86) International application number: PCT/CN2022/097232
(87) International publication number: WO 2023/236020

(56) References cited:
- WO-A1-2021/196117
- WO-A1-2022/057628
- CN-A- 111 917 813
- JP-A- 2002 232 478
- US-A1- 2023 345 322

## Description

### TECHNICAL FIELD

The present disclosure relates to a field of communication technologies, and in particular to a data requesting method, a request receiving method, a data requesting apparatus, a request receiving apparatus, and computer readable storage mediums.

### BACKGROUND

With rapid development of high-speed-railway technologies and rapid deployment and opening of high-speed-railways, more and more users will select high-speed-trains to travel. To meet communication requirements of mobile users riding the high-speed-trains and ensure a communication quality of the mobile users, an operator selects to deploy a high-speed-railway dedicated network to specifically serve the mobile users.

There is a great difference between the high-speed-railway dedicated network and a common public long term evolution (LTE) network. In the high-speed-railway dedicated network, a plurality of RRUs (remote radio units) are cascaded together as a cell, to serve mobile users on the high-speed-train.

When a user moves in the high-speed-railway dedicated network, there is a scenario where the user passes a tunnel. A base station in the high-speed-railway dedicated network is generally disposed outside the tunnel, and signal coverage in the tunnel is relatively weak, resulting in the affected communication quality of the user entering the tunnel.

WO2021196117A1 discloses methods for preloading data onto a wireless device based on predicted network status coverage and predicted user data access behaviours; in an aspect, a server may receive trip information a wireless device, receive network coverage map information representing a different network coverage areas, predict a travel time for the wireless device to reach the network coverage area with reduced signal quality, predict a travel duration of the wireless device within that network coverage area, and transmit a notification to the wireless device to enable preloading appropriate data before entering the network coverage area; further aspects include wireless devices configure to communicate with the server and preloading appropriate data before entering the network coverage area.

WO2022057628A1 discloses a data buffering method including: an application processor sending preset path information of a first route to a modulation and demodulation processor, the preset path information including a node switching list of the first route, the node switching list including information of a plurality of nodes, each node corresponding to at least one cell, and the information of each node including a node identifier, a network performance identifier of the node and a cell identifier corresponding to the node; and the modulation and demodulation processor sending first indication information to the application processor, the first indication information being used to instruct the application processor to buffer data, and the first indication information being determined according to the preset path information.

### SUMMARY

In view of this, embodiments of the present disclosure provide a data requesting method, a request receiving method, a data requesting apparatus, a request receiving apparatus, and computer readable storage mediums, to solve a technical problem in the related art.

According to a first aspect of the invention, a data requesting method is provided. The method is performed by a terminal and includes: sending, before the terminal enters a region where communication is affected, request information to a network device; wherein before the terminal enters the region, the method further includes: determining, according to a moving speed of the terminal, total volume of data for data to be requested, wherein the total volume of data is for the network device repeatedly transmitting the data for multiple times, and the data is to be used by the terminal in the region, wherein the moving speed is positively correlated with the total volume of data and positively correlated with a number of times for requesting to repeatedly transmit the data; wherein the terminal moves in a high-speed-railway dedicated network; the request information is to request the network device to repeatedly send the data to the terminal in the number of times; the request information further carries a time for sending the data, wherein the larger the moving speed is, and the earlier the time for the network device sending the data is, and the more the number of times for requesting the network device to repeatedly transmit the data is; the request information further carries a duration for sending the data.

In an embodiment, the network device includes a network device in the high-speed-railway dedicated network; and/or the region includes a tunnel.

In an embodiment, the request information further carries a data volume of the data.

In an embodiment, the method further includes determining the data volume according to at least one of: a path duration for the terminal passing through the region; the moving speed of the terminal; a service type of the data; or a service quality of the data.

In an embodiment, the method further includes determining the time according to at least one of: a path duration for the terminal passing through the region; or the moving speed of the terminal.

In an embodiment, the sending, before the terminal enters the region where communication is affected, request information to the network device, includes: determining at least one of a first time or a first position when entering the region; and sending the request information to the network device at at least one of a second time or a second position; wherein the second time is before the first time by a preset duration, and the second position is before the first position by a preset distance.

In an embodiment, the determining at least one of a first time or a first position when entering the region, includes: predicting the first time according to big data based on historical moving information of the terminal which is to enter the region and a model learned by artificial intelligence.

In an embodiment, the determining at least one of a first time or a first position when entering the region, includes: predicting the first time according to a current position and a current speed of the terminal.

According to a second aspect of the invention, a request receiving method is provided. The method is performed by a network device and includes: receiving request information sent by a terminal before entering a region where communication is affected, wherein the request information is to request the network device to repeatedly send data to the terminal in a number of times, and the data is to be used by the terminal in the region, wherein a moving speed of the terminal is positively correlated with total volume of data for the network device repeatedly transmitting the data to the terminal in the number of times, and is positively correlated with the number of times; repeatedly transmitting the data to the terminal in the number of times, wherein the terminal moves in a high-speed-railway dedicated network; the request information further carries a time for sending the data, wherein the larger the moving speed is, and the earlier the time for the network device sending the data is, and the more the number of times for requesting the network device to repeatedly transmit the data is; the request information further carries a duration for sending the data.

In an embodiment, the network device includes a network device in the high-speed-railway dedicated network; and/or the region includes a tunnel.

In an embodiment, the request information further carries a data volume of the data.

In an embodiment, the repeatedly transmitting the data to the terminal in the number of times includes: sending the data to the terminal according to the data volume of the data.

According to a third aspect of the invention, a data requesting apparatus is provided. The apparatus is applied to a terminal and includes: a sending module, configured to send, before a terminal enters a region where communication is affected, request information to a network device; and determine, according to a moving speed of the terminal, total volume of data for data to be requested, wherein the total volume of data is for the network device repeatedly transmitting the data for multiple times, and the data is to be used by the terminal in the region, wherein the moving speed is positively correlated with the total volume of data and positively correlated with a number of times for requesting to repeatedly transmit the data; wherein the request information is to request the network device to repeatedly send the data to the terminal in the number of times; the request information further carries a time for sending the data, wherein the larger the moving speed is, and the earlier the time for the network device sending the data is, and the more the number of times for requesting the network device to repeatedly transmit the data is; the request information further carries a duration for sending the data.

According to a fourth aspect of the invention, a request receiving apparatus is provided. The apparatus is applied to a network device and includes: a receiving module, configured to receive request information sent by a terminal before entering a region where communication is affected, wherein the request information is to request a network device to repeatedly send data to the terminal in a number of times, and the data is to be used by the terminal in the region, wherein a moving speed of the terminal is positively correlated with total volume of data for the network device repeatedly transmitting the data to the terminal in the number of times, and is positively correlated with the number of times; a sending module, configured to repeatedly transmit the data to the terminal in the number of times, wherein the terminal moves in a high-speed-railway dedicated network; the request information further carries a time for sending the data, wherein the larger the moving speed is, and the earlier the time for the network device sending the data is, and the more the number of times for requesting the network device to repeatedly transmit the data is; the request information further carries a duration for sending the data.

According to a fifth aspect of the invention, a computer readable storage medium is provided. The computer readable storage medium is configured to store a computer program; where when the computer program is executed by the processor, steps of the data requesting method are implemented.

According to a sixth aspect of the invention, a computer readable storage medium is provided. The computer readable storage medium is configured to store a computer program; where when the computer program is executed by the processor, steps of the request receiving method are implemented.

According to the embodiments of the present disclosure, before entering the region where the communication is affected, the terminal may send the request information to the network device, to request the network device to send data to be used by the terminal in the region to the terminal in advance, so that before entering the region, the terminal may receive the data to be used after entering the region, and then after entering the region, the terminal may use the data received in advance, which ensures the continuity of the service performed by the terminal before entering the region and after entering the region, and further ensures a good user experience.

### BRIEF DESCRIPTION OF DRAWINGS

To more clearly describe technical solutions in embodiments of the present disclosure, drawings that need to be used in description of the embodiments will be briefly described below. Obviously, the drawings described below are for only some of the embodiments of the present disclosure, and those skilled in the art may also obtain other drawings based on these accompanying drawings without any creative efforts.
FIG. 1 is a schematic flowchart of a data requesting method shown according to an embodiment of the present disclosure.
FIG. 2 is a schematic flowchart of another data requesting method shown according to an embodiment of the present disclosure.
FIG. 3 is a schematic flowchart of still another data requesting method shown according to an embodiment of the present disclosure.
FIG. 4 is a schematic flowchart of a request receiving method shown according to an embodiment of the present disclosure.
FIG. 5 is a schematic block diagram of a data requesting apparatus shown according to an embodiment of the present disclosure.
FIG. 6 is a schematic block diagram of a request receiving apparatus shown according to an embodiment of the present disclosure.
FIG. 7 is a schematic block diagram of a data requesting apparatus shown according to an embodiment of the present disclosure.
FIG. 8 is a schematic block diagram of a request receiving apparatus shown according to an embodiment of the present disclosure.

### DETAILED DESCRIPTION

The technical solutions in the embodiments of the present disclosure will be described clearly and completely below in combination with the accompanying drawings in the embodiments of the present disclosure. Obviously, the described embodiments are merely a part of and not all of the embodiments of the present disclosure. All other embodiments obtained by those skilled in the art based on the embodiments of the present disclosure without creative efforts shall fall within the scope of protection of the present disclosure.

Terms used in the embodiments of the present disclosure are only for a purpose of describing specific embodiments, and are not intended to limit the embodiments of the present disclosure. Singular forms, "a/an" and "the" used in the embodiments and the appended claims of the present disclosure are also intended to include majority forms, unless the context clearly indicates other meanings. It should also be understood that the term "and/or" used herein refers to and includes any or all possible combinations of one or more related listed items.

It should be understood that although terms, such as "first," "second," "third," etc., may be used in the embodiments of the present disclosure to describe various information, such information should not be limited by these terms. These terms are only used to distinguish a same type of information from each other. For example, without departing from the scope of the embodiments of the present disclosure, a first position may also be referred to as a second position, and similarly, the second position may also be referred to as the first position. Depending on the context, the term "if" used herein may be interpreted as "when," "while," or "in response to determining."

For purposes of brevity and ease of understanding, the used term is "greater than," "less than," "higher than," or "lower than" when representing a size relationship herein. However, those skilled in the art may understand that the term "greater than" also covers the meaning of "greater than or equal to", and the term "less than" also covers the meaning of "less than or equal to"; the term "higher than" covers the meaning of "higher than or equal to"; and the term "lower than" also covers the meaning of "lower than or equal to".

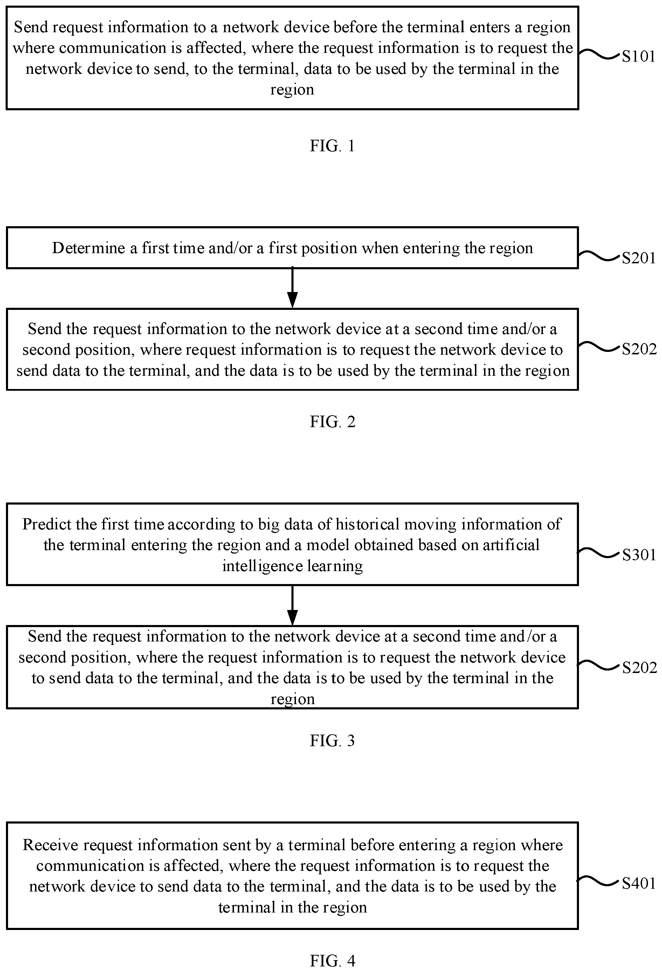

FIG. 1 is a schematic flowchart of a data requesting method shown according to an embodiment of the present disclosure. The data requesting method shown in this embodiment may be performed by a terminal, and the terminal includes but is not limited to a communication apparatus, such as a mobile phone, a tablet computer, a wearable device, a sensor, an Internet of Things device, etc. The terminal may communicate with a network device, and the network device includes but is not limited to a network device, such as a base station, a core network, etc., in a communication system, such as 4G, 5G, 6G, etc.

As shown in FIG. 1, the data requesting method may include the following step S101.

At step S101, request information is sent to a network device before the terminal enters a region where communication is affected.

The request information is to request the network device to send, to the terminal, data to be used by the terminal in the region.

In an embodiment, the terminal may pass through a region where communication is affected during movement. For example, when the terminal moves on a highway, for example, a user holding a mobile phone drives a car to travel on the highway, that is, the mobile phone moves in a public cell, and may pass through a region where communication is affected, where the region includes a tunnel passed by the highway. For example, when the terminal moves in a high-speed-railway dedicated network, the terminal may pass through a region where communication is affected, where the region includes a tunnel passed by a high-speed-train. The following embodiments mainly illustrate technical solutions of the present disclosure in a scenario in which a terminal moves in the high-speed-railway dedicated network.

In an embodiment, the network device includes a network device in a high-speed-railway dedicated network, and/or the region includes a tunnel.

The terminal may determine a first time when entering the region, and then send the request information to the network device before the first time; or the terminal may determine a first position when entering the region, and then send the request information to the network device before the first position.

Because the communication performed by the terminal in the region may be affected, for example, in the case where the region includes a tunnel, after a user riding a high-speed-train carries the terminal to enter the tunnel, the communication quality of the terminal may be reduced, or even a communication interruption may occur, which causes a service performed by the terminal to be affected.

For example, before entering the tunnel, the user is watching an online video by the terminal, and after entering the tunnel, because the communication quality is reduced, a data transmission rate of a video service is reduced or even interrupted, such that playing of the video watched by the user is blocked or even stopped, and the user experience is seriously affected.

According to an embodiment of the present disclosure, before entering the region where the communication is affected, the terminal may send the request information to the network device, where the request information may be carried in RRC (radio resource control) signaling and sent to the network device, to request the network device to send data to be used by the terminal in the region to the terminal in advance, so that before entering the region, the terminal may receive the data to be used after entering the region, and then after entering the region, the terminal may use the data received in advance, which ensures the continuity of the service performed by the terminal before entering the region and after entering the region, and further ensures a good user experience.

In an embodiment, the request information further carries at least one of the following auxiliary information:
a data volume of the data;
a time for sending the data; or
a duration for sending the data.

The request information sent by the terminal to the network device may further carry the auxiliary information for reference by the network device. It should be noted that the auxiliary information is only for reference by the network device, and cannot decide an action of the network device, that is, the network device may select to send the data requested by the terminal according to the auxiliary information, or may select to not send the data requested by the terminal according to the auxiliary information, but send the data to the terminal according to a configuration of the network device, a protocol agreement, etc.

For example, the request information may further carry a data volume of data which the terminal requests the network device to send in advance, and the network device may send the data of the data volume to the terminal accordingly. Of course, the network device may also determine a data volume of the data to be sent as needed.

For example, the request information may further carry a time at which the terminal requests the network device to send the data in advance, and the network device may send the data to the terminal at the time accordingly. Of course, the network device may also determine the time for sending the data as needed.

For example, the request information may further carry a duration at which the terminal requests the network device to send the data in advance, and the network device may send the data of the data volume to the terminal accordingly. Of course, the network device may also determine the data volume of the data to be sent as needed.

In an embodiment, the method further includes: determining the data volume according to at least one of:
a path duration for the terminal passing through the region; for example, the path duration is positively correlated with the data volume;
a moving speed of the terminal; for example, the moving speed is positively correlated with the data volume;
a service type of the data; or
a service quality of the data; for example, the service quality is positively correlated with the data volume.

In an embodiment, the terminal may determine the path duration for the terminal passing through the region, and then determine the data volume of the data to be requested according to the path duration. Because the longer the path duration is, the more the data to be used by the terminal in the region is, and the larger the data volume of the data to be requested is, the path duration may be set to be positively correlated with the data volume, so as to ensure that the data volume of the requested data meets the use requirement of the terminal in the region.

In an embodiment, the terminal may determine a moving speed of the terminal, for example, a current moving speed, or a moving speed of the terminal in the region, and then determine the data volume of the data to be requested according to the moving speed. Because the faster the moving speed of the terminal is, the lower the communication quality is, to overcome this situation, the network device may perform enhanced coverage on the terminal, for example, repeatedly sending the data to the terminal. That is, in the embodiment, the data volume may refer to total volume of data for repeatedly transmitting the data for multiple times. In other embodiments, the data volume may be the data volume for transmitting the data once. Therefore, it may be set that the speed is positively correlated with the data volume, and further, it may be set that the speed is positively correlated with the number of times for requesting to repeatedly transmit the data. That is, the greater the speed is, and the more the number of times for requesting the network device to repeatedly transmit the data to the terminal is, so as to improve a success rate of decoding the requested data by the terminal, and ensure that the terminal can successfully decode the data sent by the network device in a process of a high-speed movement.

In an embodiment, the terminal may determine a service type of data to be used in the region, and then determine the data volume of the data to be requested according to the service type. For example, when the service type is a video service (for example, an online video), the data volume of the data to be requested is relatively large; when the service type is an audio service (for example, an online music), the data volume of the data to be requested is relatively small. Certainly, the service type is not limited to the above two types, and may further include other service types, for example, an FTP (file transfer protocol) service, a WWW service (one of mobile communication services), etc.

In an embodiment, the terminal may determine a service quality of data to be used in the region, and then determine the data volume of the data to be requested according to the service quality. For most services, the higher the service quality is, the larger the data volume of the required data is, so the service quality may be set to be positively correlated with the data volume, so as to ensure that the data volume of the requested data meets the service quality required by the terminal in the region.

How to determine the time for sending the data is exemplarily described below by several embodiments.

In an embodiment, the method further includes: determining the time according to at least one of:
a path duration for passing through the region; for example, the longer the path duration is, and the earlier the time is; or
a moving speed of the terminal; for example, the larger the moving speed is, and the earlier the time is.

In an embodiment, the time for sending the data in the auxiliary information may be determined by the terminal. For example, the terminal may determine the path duration for passing through the region, and then determine the time for sending the data according to the path duration. Because the longer the path duration is, and the larger the data volume of the data to be used in the region is, it may be set that the longer the path duration is, and the earlier the time is. For example, when the path duration is less than or equal to a duration threshold, the time for sending the data is a first time, and when the path duration is greater than the duration threshold, the time for sending the data is a second time, where the second time is earlier than the first time. Therefore, when the terminal needs to use data of a larger data volume, the network device may send the data to the terminal earlier, to ensure that sending of the data has been completed when the terminal enters the region, to meet a use requirement of the terminal.

In an embodiment, the time for sending the data in the auxiliary information may be determined by the terminal. For example, the terminal may determine a moving speed of the terminal, and then determine the time for sending the data according to the moving speed. It can be seen from the above embodiments that the larger the moving speed is, and the larger the data volume of the data to be required is. Therefore, it may be set that the larger the moving speed is, and the earlier the time is. For example, when the moving speed is less than or equal to a speed threshold, the time for sending the data is a first time, and when the moving speed is greater than the speed threshold, the time for sending the data is a second time, where the second time is earlier than the first time. Therefore, when the terminal needs data of a larger data volume, the network device may send the data to the terminal earlier, to ensure that sending of the data has been completed when the terminal enters the region, to meet a use requirement of the terminal.

FIG. 2 is a schematic flowchart of another data requesting method shown according to an embodiment of the present disclosure. As shown in FIG. 2, the sending request information to a network device before the terminal enters a region where communication is affected, includes steps S201-S202.

At step S201, a first time and/or a first position when entering the region is determined.

At step S202, the request information is sent to the network device at a second time and/or a second position.

The second time is before the first time by a preset duration, and the second position is before the first position by a preset distance.

In an embodiment, the terminal may determine a first time when entering the region, and further determine a second time before the first time. For example, the terminal may determine a time that is before the first time and is from the first time by a preset duration as the second time, and send the request information to the network device at the second time.

In an embodiment, the terminal may determine a first position when entering the region, and further determine a second position before the first position. For example, the terminal may determine a position that is before the first position and is from the first position by a preset distance as the second position, and send the request information to the network device at the second position. It should be noted that, when the terminal is in the high-speed-railway dedicated network, both the first position and the second position may be in the high-speed-railway dedicated network, for example, on a high-speed-railway. The second position being before the first position means that the second position is closer to the terminal than the first position, that is, the terminal first passes through the second position and then passes through the first position.

FIG. 3 is a schematic flowchart of still another data requesting method shown according to an embodiment of the present disclosure. As shown in FIG. 3, the determining a first time and/or a first position when entering the region, includes step S301.

At step S301, the first time is predicted according to big data based on historical moving information of the terminal which is to enter the region and a model learned by artificial intelligence.

In an embodiment, the big data based on the historical moving information of the terminal which is to enter the region may be learned (for example, machine learning or deep learning) by artificial intelligence to obtain a model whose input includes moving information of the terminal and whose output includes a first time, and the terminal may predict the first time when reaching the first position based on the model.

The moving information of the terminal includes, but is not limited to, a moving speed of the terminal before entering the region, an environmental factor (for example, a wind speed and weather), a time when entering the region, and the like. Historical moving information of each terminal entering the region may be recorded, a training sample set is formed according to the recorded information, and then the training sample set is learned based on artificial intelligence to obtain a model capable of predicting a first time when entering the region.

A process of obtaining the model may be performed by the terminal, or the process of obtaining the model may be performed by the network device and the network device may send the obtained model to the terminal. The terminal may input the moving information of the terminal into the model, and the time output by the model may be used as the first time when the terminal enters the region.

It should be noted that, in addition to predicting the first time according to the model, the terminal may calculate the first time in real time. For example, the determining a first time and/or a first position when entering the region, includes: predicting the first time according to a position and a speed of the terminal.

That is, before entering the region, the terminal may determine a current position and speed of the terminal, then determine a distance (a length of a high-speed-railway) from the current position to the first position, then determine a duration from the current position to the first position according to the determined distance and speed, and add the current time to the determined duration to obtain the first time.

FIG. 4 is a schematic flowchart of a request receiving method shown according to an embodiment of the present disclosure. The data requesting method shown in this embodiment may be performed by a network device, which may communicate with a terminal, and the terminal includes but is not limited to a communication apparatus, such as a mobile phone, a tablet computer, a wearable device, a sensor, and an Internet of Things device, etc., The network device includes but is not limited to a network device, such as a base station, a core network, etc., in a communication system, such as 4G, 5G, 6G, etc.

As shown in FIG. 4, the data requesting method may include the following step S401.

At step S401, request information sent by a terminal before entering a region where communication is affected is received, where the request information is to request the network device to send data to the terminal, and the data is to be used by the terminal in the region.

In an embodiment, the network device includes a network device in a high-speed-railway dedicated network, and/or the region includes a tunnel.

The terminal may determine a first time when entering the region, and then send the request information to the network device before the first time; or the terminal may determine a first position when entering the region, and then send the request information to the network device before the first position.

Because the communication performed by the terminal in the region may be affected, for example, in the case where the region includes a tunnel, after a user riding a high-speed-train carries the terminal to enter the tunnel, the communication quality of the terminal may be reduced, or even a communication interruption may occur, which causes a service performed by the terminal to be affected.

For example, before entering the tunnel, the user is watching an online video by the terminal, and after entering the tunnel, because the communication quality is reduced, a data transmission rate of a video service is reduced or even interrupted, such that playing of the video watched by the user is blocked or even stopped, and the user experience is seriously affected.

According to an embodiment of the present disclosure, before entering the region where the communication is affected, the terminal may send the request information to the network device, where the request information may be carried in RRC signaling and sent to the network device, to request the network device to send data to be used by the terminal in the region to the terminal in advance, so that before entering the region, the terminal may receive the data to be used after entering the region, and then after entering the region, the terminal may use the data received in advance, which ensures the continuity of the service performed by the terminal before entering the region and after entering the region, and further ensures a good user experience.

In an embodiment, the request information further carries at least one of following auxiliary information: a data volume of the data, a time for sending the data, or a duration for sending the data.

In an embodiment, the method further includes: sending the data to the terminal according to the assistance information.

The request information sent by the terminal to the network device may further carry the auxiliary information for reference by the network device. It should be noted that the auxiliary information is only for reference by the network device, and cannot decide an action of the network device, that is, the network device may select to send the data requested by the terminal according to the auxiliary information, or may select to not send the data requested by the terminal according to the auxiliary information, but send the data to the terminal according to a configuration of the network device, a protocol agreement, etc.

For example, the request information may further carry a data volume of data which the terminal requests the network device to send in advance, and the network device may send the data of the data volume to the terminal accordingly. Of course, the network device may also determine the data volume of the data to be sent as needed.

For example, the request information may further carry a time at which the terminal requests the network device to send the data in advance, and the network device may send the data to the terminal at the time accordingly. Of course, the network device may also determine the time for sending the data as needed.

For example, the request information may further carry a duration at which the terminal requests the network device to send the data in advance, and the network device may send the data of the data volume to the terminal accordingly. Of course, the network device may also determine the data volume of the data to be sent as needed.

Corresponding to the above embodiments of the data requesting method and the request receiving method, the present disclosure further provides embodiments of a data requesting apparatus and a request receiving apparatus.

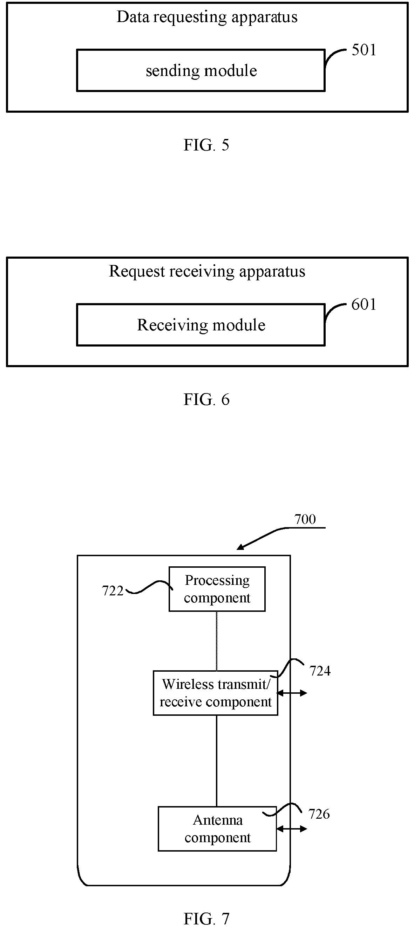

FIG. 5 is a schematic block diagram of a data requesting apparatus shown according to an embodiment of the present disclosure. The data requesting apparatus shown in this embodiment may a terminal, or an apparatus formed by modules in a terminal. The terminal includes but is not limited to a communication apparatus, such as a mobile phone, a tablet computer, a wearable device, a sensor, an Internet of Things device, etc. The terminal may communicate with a network device, and the network device includes but is not limited to a network device, such as a base station, a core network, etc., in a communication system, such as 4G, 5G, 6G, etc.

As shown in FIG. 5, the data requesting apparatus may include:
a sending module 501, configured to send request information to a network device before the terminal enters a region where communication is affected; where the request information is to request the network device to send data to the terminal, and the data is to be used by the terminal in the region.

In an embodiment, the network device includes a network device in a high-speed-railway dedicated network, and/or the region includes a tunnel.

In an embodiment, the request information further carries at least one of following auxiliary information: a data volume of the data, a time for sending the data, or a duration for sending the data.

In an embodiment, the apparatus further includes: a processing module, configured to determine the data volume of the data according to at least one of: a path duration for the terminal passing through the region, where the path duration is positively correlated with the data volume; a moving speed of the terminal, where the moving speed is positively correlated with the data volume; a service type of the data; or a service quality of the data, where the service quality is positively correlated with the data volume.

In an embodiment, the processing module is further configured to determine the time according to at least one of: a path duration for the terminal passing through the region, where the longer the path duration is, and the earlier the time is; or a moving speed of the terminal, where the larger the moving speed is, and the earlier the time is.

In an embodiment, the apparatus further includes: a processing module, configured to determine a first time and/or a first position when entering the region; the sending module is configured to send the request information to the network device at a second time and/or a second position; where the second time is before the first time by a preset duration, and the second position is before the first position by a preset distance.

In an embodiment, the processing module is configured to predict the first time according to big data based on historical moving information of the terminal which is to enter the region and a model learned by artificial intelligence.

In an embodiment, the processing module is configured to predict the first time according to a position and a speed of the terminal.

FIG. 6 is a schematic block diagram of a request receiving apparatus shown according to an embodiment of the present disclosure. The request receiving apparatus shown in this embodiment may be a network device or an apparatus formed by modules in a network device. The network device may communicate with a terminal, the terminal includes but is not limited to a communication apparatus, such as a mobile phone, a tablet computer, a wearable device, a sensor, and an Internet of Things device, etc., The network device includes but is not limited to a network device, such as a base station, a core network, etc., in a communication system, such as 4G, 5G, 6G, etc.

As shown in FIG. 6, the request receiving apparatus may include:
a receiving module 601, configured to receive request information sent by a terminal before entering a region where communication is affected, where the request information is to request a network device to send, to the terminal, data to be used by the terminal in the region.

In an embodiment, the network device includes a network device in a high-speed-railway dedicated network, and/or the region includes a tunnel.

In an embodiment, the request information further carries at least one of following auxiliary information: a data volume of the data, a time for sending the data, or a duration for sending the data.

In an embodiment, the apparatus further includes: a sending module, configured to send the data to the terminal according to the assistance information.

The specific manners in which each of the modules of the apparatus in the above embodiments performs operations have been described in detail in the embodiments related to the method, and will not be explained here in detail.

Since the embodiments of the apparatuses substantially corresponds to the embodiments of the methods, and the related contents may refer to the description of the embodiments of the methods. The embodiments of the apparatuses described above are only schematic. The modules explained as separate components may be or may not be physically separated, and the components displayed as modules may be or may not be physical modules, that is, they may be located in one place or may be distributed across multiple network modules. A part or all of modules may be selected according to actual needs to achieve the purpose of the solutions in these embodiments. Those skilled in the art may understand and implement other embodiments without a creative work.

An embodiment of the present disclosure further provides a communication apparatus, including: a processor; and a memory for storing a computer program, where when the computer program is executed by the processor, the data requesting method of any one of the above embodiments is implemented.

An embodiment of the present disclosure further provides a communication apparatus, including: a processor; and a memory for storing a computer program, where when the computer program is executed by the processor, the request receiving method of any one of the above embodiments is implemented.

An embodiment of the present disclosure further provides a computer readable storage medium, configured to store a computer program; where when the computer program is executed by the processor, steps of the data requesting method of any one of the above embodiments are implemented.

An embodiment of the present disclosure further provides a computer readable storage medium, configured to store a computer program; where when the computer program is executed by the processor, steps of the request receiving method of any one of the above embodiments are implemented.

As shown in FIG. 7, FIG. 7 is a schematic block diagram of a request receiving apparatus 700 shown according to an embodiment of the present disclosure. The apparatus 700 may be provided as a base station. Referring to FIG. 7, the apparatus 700 includes a processing component 722, a wireless transmit/receive component 724, an antenna component 726, and a signal processing part specific to a wireless interface. The processing component 722 may further include one or more processors. One processor of the processing component 722 may be configured to implement the request receiving method of any one of the above embodiments.

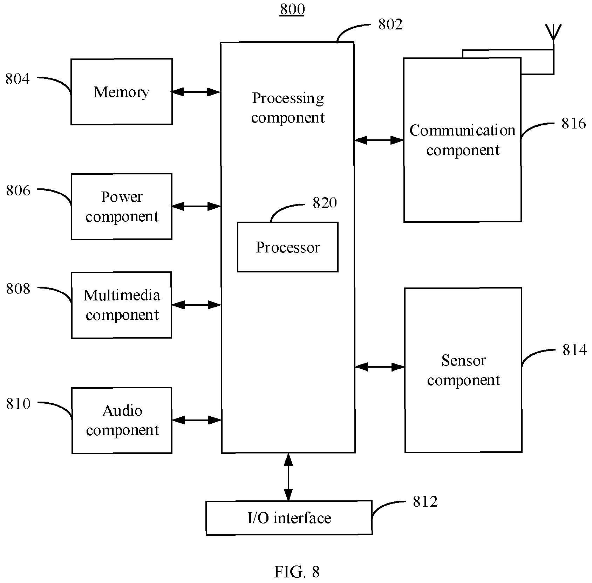

FIG. 8 is a schematic block diagram of a data requesting apparatus 800 shown according to an embodiment of the present disclosure. For example, the apparatus 800 may be a mobile phone, a computer, a digital broadcast terminal, a message transceiving device, a game console, a tablet device, a medical device, a fitness device, a personal digital assistant, etc.

Referring to FIG. 8, the apparatus 800 may include one or more of the following components: a processing component 802, a memory 804, a power component 806, a multimedia component 808, an audio component 810, an input/output (I/O) interface 812, a sensor component 814, and a communication component 816.

The processing component 802 typically controls the overall operation of the apparatus 800, such as operations associated with display, phone calls, data communication, camera operations, and recording operations. The processing component 802 may include one or more processors 820 to execute instructions to complete all or part of the steps in the above data requesting method. Additionally, the processing component 802 may include one or more modules to facilitate interaction between the processing component 802 and other components. For example, the processing component 802 may include a multimedia module to facilitate interaction between the multimedia component 808 and the processing component 802.

The memory 804 is configured to store various types of data to support operations of the apparatus 800. Examples of such data include instructions, contact data, phonebook data, messages, pictures, videos, etc., for any application program or method operating on the apparatus 800. The memory 804 may be realized by any type of volatile or non-volatile storage device or their combination, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk, or an optical disk.

The power component 806 provides power to various components of the apparatus 800. The power component 806 may include a power supply management system, one or more power supplies, and other components that are associated with generating, managing, and distributing power for the apparatus 800.

The multimedia component 808 includes a screen providing an output interface between the apparatus 800 and the user. In some embodiments, the screen may include a liquid crystal display (LCD) and a touch panel (TP). If the screen includes the touch panel, the screen may be implemented as a touch screen, to receive an input signal from the user. The touch panel includes one or more touch sensors to sense the touch, the slide, and the gesture on the touch panel. The touch sensor may not only sense a boundary of the touch or slide action, but also detect a duration and pressure related to the touch or slide operation. In some embodiments, the multimedia component 808 includes a front facing camera and/or a rear facing camera. When the apparatus 800 is in an operation mode, such as a shooting mode or a video mode, the front facing camera and/or the rear facing camera may receive external multimedia data. Each of the front facing camera and rear facing camera may be a fixed optical lens system or has a focal length and an optical zoom capability.

The audio component 810 is configured to output and/or input audio signals. For example, the audio component 810 includes a microphone (MIC). The microphone is configured to receive external audio signals when the apparatus 800 is in the operating mode, such as a call mode, a recording mode, and a speech recognition mode. The received audio signals may be further stored in the memory 804 or sent via the communication component 816. In some embodiments, the audio component 810 also includes a speaker for outputting the audio signals.

The I/O interface 812 provides an interface between the processing component 802 and peripheral interface modules. The peripheral interface modules may be keyboards, click wheels, buttons, etc. These buttons may include but are not limited to: a home button, a volume button, a start button, and a lock button.

The sensor component 814 includes one or more sensors to provide various aspects of state assessment for the apparatus 800. For example, the sensor component 814 may detect an open/closed state of the apparatus 800, relative positioning of components that are for example a display and keypad of the apparatus 800. The sensor component 814 may also detect a position change of the apparatus 800 or of a component of the apparatus 800, presence or absence of the user contacting with the apparatus 800, an orientation or acceleration/deceleration of the apparatus 800, and a temperature change of the apparatus 800. The sensor component 814 may include a proximity sensor configured to detect the presence of nearby objects without any physical contact. The sensor component 814 may also include a light sensor, such as a CMOS or CCD image sensor, for use in an imaging application. In some embodiments, the sensor component 814 may also include an acceleration sensor, a gyroscope sensor, a magnetic sensor, a pressure sensor, or a temperature sensor.

The communication component 816 is configured to facilitate wired or wireless communication between the apparatus 800 and other devices. The apparatus 800 may access a wireless network based on a communication standard, such as WiFi, 2G, 3G, 4G LTE, 5G NR, or a combination of them. In an exemplary embodiment, the communication component 816 receives, via a broadcast channel, a broadcast signal or broadcast related information from an external broadcast management system. In an exemplary embodiment, the communication component 816 further includes a near-field communication (NFC) module to facilitate short-range communication. For example, the NFC module may be implemented based on a radio frequency identification (RFID) technology, an infrared data association (IrDA) technology, an ultra-wideband (UWB) technology, a Bluetooth (BT) technology, and other technologies.

In an exemplary embodiment, the apparatus 800 may be implemented by one or more application specific integrated circuits (ASICs), digital signal processors (DSPs), digital signal processing devices (DSPDs), programmable logic devices (PLDs), field programmable gate arrays (FPGAs), controllers, microcontrollers, microprocessors, or other electronic components to perform the above data requesting method.

In an exemplary embodiment, a non-transitory computer readable storage medium including instructions is also provided, such as the memory 804 including the instructions. The above instructions may be executed by the processor 820 of the apparatus 800 to complete the above data requesting method. For example, the non-transitory computer readable storage medium may be a ROM, a random access memory (RAM), a CD-ROM, a magnetic tape, a floppy disk, an optical data storage device, etc.

Those skilled in the art will easily come up with other implementation solutions of the present disclosure after considering the specification and practicing the present disclosure disclosed herein. The present disclosure aims to cover any variations, uses, or adaptive changes of the present disclosure, which follow general principles of the present disclosure and include common knowledge or customary technical means in the art not disclosed in the present disclosure.

It should be understood that the present disclosure is not limited to the precise structure described above and shown in the accompanying drawings, and various modifications and changes may be made without departing from its scope. The scope of the present disclosure is limited only by the appended claims.

It should be noted that the relationship terms used herein, such as "first", "second" and the like are only to distinguish one entity or operation from another entity or operation, but do not necessarily require or imply that there is any actual relationship or order between these entities or operations. The terms "include", "comprise", or any variants thereof are intended to cover a non-exclusive inclusion, such that processes, methods, articles, or devices, including a series of elements, include not only those elements that have been listed, but also other elements that are not specifically listed or the elements intrinsic to these processes, methods, articles, or devices. Without further limitations, elements limited by the wording "include(s) a/an..." or "comprise(s) a/an..." do not exclude additional identical elements in the processes, methods, articles or devices, including the listed elements.

Although the invention has been explained in relation to its preferred embodiment(s) as mentioned above, it is to be understood that many other possible modifications and variations can be made without departing from the scope of the present invention, which is defined by the claims.

## Claims

1. A data requesting method, performed by a terminal and comprising:
sending (S101), before the terminal enters a region where communication is affected, request information to a network device;
wherein, before the terminal enters the region, the method further comprises:
determining, according to a moving speed of the terminal, total volume of data for data to be requested, wherein the total volume of data is for the network device repeatedly transmitting the data for multiple times, and the data is to be used by the terminal in the region, wherein the moving speed is positively correlated with the total volume of data and positively correlated with a number of times for requesting to repeatedly transmit the data;
wherein the terminal moves in a high-speed-railway dedicated network; the request information is to request the network device to repeatedly send the data to the terminal in the number of times; the request information further carries a time for sending the data, wherein the larger the moving speed is, and the earlier the time for the network device sending the data is, the more the number of times for requesting the network device to repeatedly transmit the data is; and the request information further carries a duration for sending the data.

2. The method of claim 1, wherein
the network device comprises a network device in the high-speed-railway dedicated network; and/or
the region comprises a tunnel.

3. The method of claim 1 or 2, wherein the request information further carries a data volume of the data.

4. The method of claim 3, further comprising determining the data volume according to at least one of:
a path duration for the terminal passing through the region;
the moving speed of the terminal;
a service type of the data; or
a service quality of the data.

5. The method of claim 3 or 4, further comprising determining the time according to at least one of:
a path duration for the terminal passing through the region; or
the moving speed of the terminal.

6. The method of any one of claims 1 to 5, wherein the sending, before the terminal enters the region where communication is affected, request information to the network device, comprises:
determining (S201) at least one of a first time or a first position when entering the region; and
sending (S202) the request information to the network device at at least one of a second time or a second position;
wherein the second time is before the first time by a preset duration, and the second position is before the first position by a preset distance.

7. The method of claim 6, wherein the determining at least one of a first time or a first position when entering the region, comprises:
predicting (S301) the first time according to big data based on historical moving information of the terminal which is to enter the region and a model learned by artificial intelligence.

8. The method of claim 6, wherein the determining at least one of a first time or a first position when entering the region, comprises:
predicting the first time according to a current position and a current speed of the terminal.

9. A request receiving method, performed by a network device and comprising:
receiving (S401) request information sent by a terminal before entering a region where communication is affected, wherein the request information is to request the network device to repeatedly send data to the terminal in a number of times, and the data is to be used by the terminal in the region, wherein a moving speed of the terminal is positively correlated with total volume of data for the network device repeatedly transmitting the data to the terminal in the number of times, and is positively correlated with the number of times;
repeatedly transmitting the data to the terminal in the number of times, wherein the terminal moves in a high-speed-railway dedicated network; the request information further carries a time for sending the data, wherein the larger the moving speed is, and the earlier the time for the network device sending the data is, the more the number of times for requesting the network device to repeatedly transmit the data is; and the request information further carries a duration for sending the data.

10. The method of claim 9, wherein
the network device comprises a network device in the high-speed-railway dedicated network; and/or
the region comprises a tunnel.

11. The method of claim 9 or 10, wherein the request information further carries a data volume of the data.

12. The method of claim 11, wherein the repeatedly transmitting the data to the terminal in the number of times comprises:
sending the data to the terminal according to the data volume of the data.

13. A data requesting apparatus, comprising:
a sending module (501), configured to send, before a terminal enters a region where communication is affected, request information to a network device; and determine, according to a moving speed of the terminal, total volume of data for data to be requested, wherein the total volume of data is for the network device repeatedly transmitting the data for multiple times, and the data is to be used by the terminal in the region, wherein the moving speed is positively correlated with the total volume of data and positively correlated with a number of times for requesting to repeatedly transmit the data;
wherein the request information is to request the network device to repeatedly send the data to the terminal in the number of times; the request information further carries a time for sending the data, wherein the larger the moving speed is, and the earlier the time for the network device sending the data is, the more the number of times for requesting the network device to repeatedly transmit the data is; and the request information further carries a duration for sending the data.

14. A request receiving apparatus, comprising:
a receiving module (601), configured to receive request information sent by a terminal before entering a region where communication is affected, wherein the request information is to request a network device to repeatedly send data to the terminal in a number of times, and the data is to be used by the terminal in the region, wherein a moving speed of the terminal is positively correlated with total volume of data for the network device repeatedly transmitting the data to the terminal in the number of times, and is positively correlated with the number of times;
a sending module, configured to repeatedly transmit the data to the terminal in the number of times, wherein the terminal moves in a high-speed-railway dedicated network; the request information further carries a time for sending the data, wherein the larger the moving speed is, and the earlier the time for the network device sending the data is, the more the number of times for requesting the network device to repeatedly transmit the data is; and the request information further carries a duration for sending the data.

15. A computer readable storage medium, storing a computer program; wherein when the computer program is executed by a processor, the processor is caused to perform steps of the method of any one of claims 1 to 12.

## Patentansprüche

1. Datenanforderungsverfahren, durchgeführt von einem Endgerät, umfassend:
Senden (S101), bevor das Endgerät in ein Gebiet eintritt, in dem Kommunikation beeinträchtigt ist, von Anforderungsinformationen an eine Netzwerkeinrichtung;
wobei vor dem Eintritt des Endgeräts in das Gebiet das Verfahren ferner umfasst:
Bestimmen, in Abhängigkeit von einer Bewegungsgeschwindigkeit des Endgeräts, eines Gesamtvolumens an Daten, die anzufordern sind, wobei das Gesamtvolumen an Daten dafür vorgesehen ist, dass die Netzwerkeinrichtung die Daten mehrfach wiederholt an das Endgerät überträgt, und die Daten vom Endgerät in dem Gebiet genutzt werden sollen, wobei die Bewegungsgeschwindigkeit positiv mit dem Gesamtvolumen an Daten und positiv mit einer Anzahl von Wiederholungen der Datenanforderung korreliert;
wobei sich das Endgerät in einem für Hochgeschwindigkeitsbahnen dedizierten Netzwerk bewegt; die Anforderungsinformationen dazu dienen, die Netzwerkeinrichtung aufzufordern, die Daten wiederholt in der genannten Anzahl an das Endgerät zu senden; die Anforderungsinformationen ferner einen Zeitpunkt für das Senden der Daten enthalten, wobei gilt: je höher die Bewegungsgeschwindigkeit ist und je früher der Zeitpunkt für das Senden der Daten durch die Netzwerkeinrichtung liegt, desto größer ist die Anzahl der Wiederholungen, mit denen die Netzwerkeinrichtung aufgefordert wird, die Daten wiederholt zu übertragen; und wobei die Anforderungsinformationen ferner eine Dauer für das Senden der Daten enthalten.

2. Verfahren nach Anspruch 1, wobei
die Netzwerkeinrichtung eine Netzwerkeinrichtung in dem für Hochgeschwindigkeitsbahnen dedizierten Netzwerk umfasst; und/oder
das Gebiet einen Tunnel umfasst.

3. Verfahren nach Anspruch 1 oder 2, wobei die Anforderungsinformationen ferner ein Datenvolumen der Daten enthalten.

4. Verfahren nach Anspruch 3, ferner umfassend Bestimmen des Datenvolumens in Abhängigkeit von mindestens einem der folgenden Parameter:
einer Pfaddauer, während der das Endgerät das Gebiet durchquert;
der Bewegungsgeschwindigkeit des Endgeräts;
einem Diensttyp der Daten; oder
einer Dienstgüte der Daten.

5. Verfahren nach Anspruch 3 oder 4, ferner umfassend Bestimmen des Zeitpunkts in Abhängigkeit von mindestens einem der folgenden Parameter:
einer Pfaddauer, während der das Endgerät das Gebiet durchquert; oder
der Bewegungsgeschwindigkeit des Endgeräts.

6. Verfahren nach einem der Ansprüche 1 bis 5, wobei das Senden, bevor das Endgerät in das Gebiet eintritt, in dem die Kommunikation beeinträchtigt ist, von Anforderungsinformationen an die Netzwerkeinrichtung umfasst:
Bestimmen (S201) mindestens eines von einem ersten Zeitpunkt oder einer ersten Position beim Eintritt in das Gebiet; und
Senden (S202) der Anforderungsinformationen an die Netzwerkeinrichtung zu mindestens einem eines zweiten Zeitpunkts oder einer zweiten Position;
wobei der zweite Zeitpunkt um eine vorbestimmte Dauer vor dem ersten Zeitpunkt liegt und die zweite Position um eine vorbestimmte Distanz vor der ersten Position liegt.

7. Verfahren nach Anspruch 6, wobei das Bestimmen mindestens eines von einem ersten Zeitpunkt oder einer ersten Position beim Eintritt in das Gebiet umfasst:
Vorhersagen (S301) des ersten Zeitpunkts anhand von Big Data basierend auf historischen Bewegungsinformationen des Endgeräts, das im Begriff ist, in das Gebiet einzutreten, und eines durch künstliche Intelligenz erlernten Modells.

8. Verfahren nach Anspruch 6, wobei das Bestimmen mindestens eines von einem ersten Zeitpunkt oder einer ersten Position beim Eintritt in das Gebiet umfasst:
Vorhersagen des ersten Zeitpunkts in Abhängigkeit von einer aktuellen Position und einer aktuellen Geschwindigkeit des Endgeräts.

9. Anforderungsempfangsverfahren, durchgeführt von einer Netzwerkeinrichtung, umfassend:
Empfangen (S401) von Anforderungsinformationen, die von einem Endgerät gesendet werden, bevor dieses in ein Gebiet eintritt, in dem Kommunikation beeinträchtigt ist, wobei die Anforderungsinformationen dazu dienen, die Netzwerkeinrichtung aufzufordern, Daten wiederholt in einer Anzahl von Wiederholungen an das Endgerät zu senden, und die Daten vom Endgerät in dem Gebiet genutzt werden sollen, wobei eine Bewegungsgeschwindigkeit des Endgeräts positiv mit einem Gesamtvolumen an Daten korreliert, die die Netzwerkeinrichtung wiederholt in der Anzahl von Wiederholungen an das Endgerät überträgt, und positiv mit der Anzahl der Wiederholungen korreliert;
wiederholtes Übertragen der Daten an das Endgerät in der Anzahl von Wiederholungen, wobei sich das Endgerät in einem für Hochgeschwindigkeitsbahnen dedizierten Netzwerk bewegt; die Anforderungsinformationen ferner einen Zeitpunkt für das Senden der Daten enthalten, wobei gilt: je höher die Bewegungsgeschwindigkeit ist und je früher der Zeitpunkt für das Senden der Daten durch die Netzwerkeinrichtung liegt, desto größer ist die Anzahl der Wiederholungen, mit denen die Netzwerkeinrichtung aufgefordert wird, die Daten wiederholt zu übertragen; und wobei die Anforderungsinformationen ferner eine Dauer für das Senden der Daten enthalten.

10. Verfahren nach Anspruch 9, wobei
die Netzwerkeinrichtung eine Netzwerkeinrichtung in dem für Hochgeschwindigkeitsbahnen dedizierten Netzwerk umfasst; und/oder
das Gebiet einen Tunnel umfasst.

11. Verfahren nach Anspruch 9 oder 10, wobei die Anforderungsinformationen ferner ein Datenvolumen der Daten enthalten.

12. Verfahren nach Anspruch 11, wobei das wiederholte Übertragen der Daten an das Endgerät in der Anzahl von Wiederholungen umfasst:
Senden der Daten an das Endgerät in Abhängigkeit von dem Datenvolumen der Daten.

13. Datenanforderungsvorrichtung, umfassend:
ein Sendemodul (501), das dazu eingerichtet ist, bevor ein Endgerät in ein Gebiet eintritt, in dem die Kommunikation beeinträchtigt ist, Anforderungsinformationen an eine Netzwerkeinrichtung zu senden; und in Abhängigkeit von einer Bewegungsgeschwindigkeit des Endgeräts ein Gesamtvolumen an Daten zu bestimmen, die anzufordern sind, wobei das Gesamtvolumen an Daten dafür vorgesehen ist, dass die Netzwerkeinrichtung die Daten mehrfach wiederholt an das Endgerät überträgt, und die Daten vom Endgerät in dem Gebiet genutzt werden sollen, wobei die Bewegungsgeschwindigkeit positiv mit dem Gesamtvolumen an Daten und positiv mit einer Anzahl von Wiederholungen der Datenanforderung korreliert;
wobei die Anforderungsinformationen dazu dienen, die Netzwerkeinrichtung aufzufordern, die Daten wiederholt in der genannten Anzahl an das Endgerät zu senden; die Anforderungsinformationen ferner einen Zeitpunkt für das Senden der Daten enthalten, wobei gilt: je höher die Bewegungsgeschwindigkeit ist und je früher der Zeitpunkt für das Senden der Daten durch die Netzwerkeinrichtung liegt, desto größer ist die Anzahl der Wiederholungen, mit denen die Netzwerkeinrichtung aufgefordert wird, die Daten wiederholt zu übertragen; und wobei die Anforderungsinformationen ferner eine Dauer für das Senden der Daten enthalten.

14. Anforderungsempfangsvorrichtung, umfassend:
ein Empfangsmodul (601), das dazu eingerichtet ist, Anforderungsinformationen zu empfangen, die von einem Endgerät gesendet werden, bevor dieses in ein Gebiet eintritt, in dem die Kommunikation beeinträchtigt ist, wobei die Anforderungsinformationen dazu dienen, eine Netzwerkeinrichtung aufzufordern, Daten wiederholt in einer Anzahl von Wiederholungen an das Endgerät zu senden, und die Daten vom Endgerät in dem Gebiet genutzt werden sollen, wobei eine Bewegungsgeschwindigkeit des Endgeräts positiv mit einem Gesamtvolumen an Daten korreliert, die die Netzwerkeinrichtung wiederholt in der Anzahl von Wiederholungen an das Endgerät überträgt, und positiv mit der Anzahl der Wiederholungen korreliert;
ein Sendemodul, das dazu eingerichtet ist, die Daten wiederholt in der Anzahl von Wiederholungen an das Endgerät zu übertragen, wobei sich das Endgerät in einem für Hochgeschwindigkeitsbahnen dedizierten Netzwerk bewegt; die Anforderungsinformationen ferner einen Zeitpunkt für das Senden der Daten enthalten, wobei gilt: je höher die Bewegungsgeschwindigkeit ist und je früher der Zeitpunkt für das Senden der Daten durch die Netzwerkeinrichtung liegt, desto größer ist die Anzahl der Wiederholungen, mit denen die Netzwerkeinrichtung aufgefordert wird, die Daten wiederholt zu übertragen; und die Anforderungsinformationen ferner eine Dauer für das Senden der Daten enthalten.

15. Computerlesbares Speichermedium, auf dem ein Computerprogramm gespeichert ist, wobei das Computerprogramm bei Ausführung durch einen Prozessor diesen veranlasst, die Schritte des Verfahrens nach einem der Ansprüche 1 bis 12 durchzuführen.

## Revendications

1. Procédé de demande de données, mis en œuvre par un terminal et comprenant :
l'envoi (S101), avant que le terminal n'entre dans une zone où la communication est affectée, d'informations de demande à un dispositif de réseau ;
dans lequel, avant que le terminal n'entre dans la zone, le procédé comprend en outre :
la détermination, en fonction d'une vitesse de déplacement du terminal, d'un volume total de données pour les données à demander, le volume total de données étant destiné au dispositif de réseau pour transmettre de manière répétée les données plusieurs fois, et les données étant destinées à être utilisées par le terminal dans la zone, la vitesse de déplacement étant positivement corrélée avec le volume total de données et positivement corrélée avec un nombre de fois pour demander la transmission répétée des données ;
dans lequel le terminal se déplace dans un réseau dédié aux trains à grande vitesse ; les informations de demande sont destinées à demander au dispositif de réseau de renvoyer de manière répétée les données au terminal un nombre de fois ; les informations de demande comportent en outre un instant pour l'envoi des données, dans lequel plus la vitesse de déplacement est élevée et plus l'instant pour l'envoi des données par le dispositif de réseau est précoce, plus le nombre de fois pour demander au dispositif de réseau de transmettre de manière répétée les données est élevé ; et les informations de demande comportent en outre une durée pour l'envoi des données.

2. Procédé selon la revendication 1, dans lequel
le dispositif de réseau comprend un dispositif de réseau dans le réseau dédié aux trains à grande vitesse ; et/ou
la zone comprend un tunnel.

3. Procédé selon la revendication 1 ou 2, dans lequel les informations de demande comportent en outre un volume de données des données.

4. Procédé selon la revendication 3, comprenant en outre la détermination du volume de données en fonction d'au moins l'un des éléments suivants :
une durée de trajet pour le terminal traversant la zone ;
la vitesse de déplacement du terminal ;
un type de service des données ; ou
une qualité de service des données.

5. Procédé selon la revendication 3 ou 4, comprenant en outre la détermination de l'instant en fonction d'au moins l'un des éléments suivants :
une durée de trajet pour le terminal traversant la zone ; ou
la vitesse de déplacement du terminal.

6. Procédé selon l'une quelconque des revendications 1 à 5, dans lequel l'envoi, avant que le terminal n'entre dans la zone où la communication est affectée, d'informations de demande au dispositif de réseau, comprend :
la détermination (S201) d'au moins l'un d'un premier instant ou d'une première position lors de l'entrée dans la zone ; et
l'envoi (S202) des informations de demande au dispositif de réseau à au moins l'un d'un deuxième instant ou d'une deuxième position ;
dans lequel le deuxième instant est antérieur au premier instant d'une durée prédéterminée, et la deuxième position est antérieure à la première position d'une distance prédéterminée.

7. Procédé selon la revendication 6, dans lequel la détermination d'au moins l'un d'un premier instant ou d'une première position lors de l'entrée dans la zone, comprend :
la prédiction (S301) du premier instant selon des mégadonnées basées sur des informations de déplacement historiques du terminal qui doit entrer dans la zone et un modèle appris par intelligence artificielle.

8. Procédé selon la revendication 6, dans lequel la détermination d'au moins l'un d'un premier instant ou d'une première position lors de l'entrée dans la zone, comprend :
la prédiction du premier instant en fonction d'une position actuelle et d'une vitesse actuelle du terminal.

9. Procédé de réception de demande, mis en œuvre par un dispositif de réseau et comprenant :
la réception (S401) d'informations de demande envoyées par un terminal avant son entrée dans une zone où la communication est affectée, les informations de demande étant destinées à demander au dispositif de réseau de transmettre de manière répétée des données au terminal un nombre de fois, et les données étant destinées à être utilisées par le terminal dans la zone, une vitesse de déplacement du terminal étant positivement corrélée avec un volume total de données pour le dispositif de réseau transmettant de manière répétée les données au terminal le nombre de fois, et étant positivement corrélée avec le nombre de fois ;
la transmission répétée des données au terminal le nombre de fois, dans lequel le terminal se déplace dans un réseau dédié aux trains à grande vitesse ; les informations de demande comportent en outre un instant pour l'envoi des données, dans lequel plus la vitesse de déplacement est élevée et plus l'instant pour l'envoi des données par le dispositif de réseau est précoce, plus le nombre de fois pour demander au dispositif de réseau de transmettre de manière répétée les données est élevé ; et les informations de demande comportent en outre une durée pour l'envoi des données.

10. Procédé selon la revendication 9, dans lequel
le dispositif de réseau comprend un dispositif de réseau dans le réseau dédié aux trains à grande vitesse ; et/ou
la zone comprend un tunnel.

11. Procédé selon la revendication 9 ou 10, dans lequel les informations de demande comportent en outre un volume de données des données.

12. Procédé selon la revendication 11, dans lequel la transmission répétée des données au terminal le nombre de fois comprend :
l'envoi des données au terminal en fonction du volume de données des données.

13. Appareil de demande de données, comprenant :
un module d'envoi (501), configuré pour envoyer, avant qu'un terminal n'entre dans une zone où la communication est affectée, des informations de demande à un dispositif de réseau ; et déterminer, en fonction d'une vitesse de déplacement du terminal, un volume total de données pour les données à demander, le volume total de données étant destiné au dispositif de réseau pour transmettre de manière répétée les données plusieurs fois, et les données étant destinées à être utilisées par le terminal dans la zone, la vitesse de déplacement étant positivement corrélée avec le volume total de données et positivement corrélée avec un nombre de fois pour demander la transmission répétée des données ;
dans lequel les informations de demande sont destinées à demander au dispositif de réseau de transmettre de manière répétée les données au terminal le nombre de fois ; les informations de demande comportent en outre un instant pour l'envoi des données, dans lequel plus la vitesse de déplacement est élevée et plus l'instant pour l'envoi des données par le dispositif de réseau est précoce, plus le nombre de fois pour demander au dispositif de réseau de transmettre de manière répétée les données est élevé ; et les informations de demande comportent en outre une durée pour l'envoi des données.

14. Appareil de réception de demande, comprenant :
un module de réception (601), configuré pour recevoir des informations de demande envoyées par un terminal avant son entrée dans une zone où la communication est affectée, les informations de demande étant destinées à demander à un dispositif de réseau de transmettre de manière répétée des données au terminal un nombre de fois, et les données étant destinées à être utilisées par le terminal dans la zone, une vitesse de déplacement du terminal étant positivement corrélée avec un volume total de données pour le dispositif de réseau transmettant de manière répétée les données au terminal le nombre de fois, et étant positivement corrélée avec le nombre de fois ;
un module d'envoi, configuré pour transmettre de manière répétée les données au terminal le nombre de fois, dans lequel le terminal se déplace dans un réseau dédié aux trains à grande vitesse ; les informations de demande comportent en outre un instant pour l'envoi des données, dans lequel plus la vitesse de déplacement est élevée et plus l'instant pour l'envoi des données par le dispositif de réseau est précoce, plus le nombre de fois pour demander au dispositif de réseau de transmettre de manière répétée les données est élevé ; et les informations de demande comportent en outre une durée pour l'envoi des données.

15. Support de stockage lisible par ordinateur, stockant un programme informatique ; dans lequel, lorsque le programme informatique est exécuté par un processeur, le processeur est amené à exécuter les étapes du procédé selon l'une quelconque des revendications 1 à 12.
